# EUROPEAN PATENT APPLICATION

(11) **EP 2 260 712 A1**
(43) Date of publication of application: **15.12.2010**
(21) Application number: 09162031.0
(22) Date of filing: 05.06.2009
(51) Int. Cl.: A21D 13/00

(54) **Crispy crust bread**

(71) Applicant: Stichting Top Institute Food and Nutrition, 6709 PA Wageningen (NL)
(72) Inventor: Primo-Martin, Cristina, 5803 LZ Venray (NL); Meinders, Marcellinus Bernardus Johannes, 6703 BW Wageningen (NL); Noort, Martijn Willem Jan, 1221 BW Hilversum (NL)
(74) Representative: Swinkels, Bart Willem

(57) **Abstract**

The invention provides a method for the preparation of a dough-based product. The method comprises (a) providing a dough-based starting product and (b) applying a second dough as flour-based material to at least part of the surface of the dough-based starting product to provide a layer of said material with a layer thickness in the range of 0.1-10 mm. Optionally, the product thus obtained is (c) baked or prebaked. Preferably, the compositions of the dough of the dough-based starting product and of the second dough differ. An advantage of this method is that the final bread product has a crispy crust, crispier than when consuming a state of the art bread product, having a normal crust. Further, the crispiness of the crust may last longer than for standard bread products, not having an additional flour-based layer.

## Description

### Field of the invention

The invention relates to bread with a specific crust, and to a method for the preparation of such product.

### Background of the invention

Coatings on food products are known in the art. For instance, EP1929887 describes frozen coated food products, such as coated fish fillets, which can be re-heated conveniently by frying in a pan. In this way, a crispy product can be re-produced as any moisture, which may have impregnated the crumb, either by migration from the core of the food product during the re-heating process or by sublimation during frozen storage can be driven off. Microwave ovens do not heat the crumb to a sufficiently high temperature to drive out any accumulated moisture and, hence when re-heated in a microwave oven, the food products tend to be characterised by having soggy or rubbery coatings. EP1929887 used a crumb coating comprising (a) crumb, and (b) ungelatinised starch powder, wherein the weight ratio of crumb to ungelatinised starch powder is less than 85:15 according to the "pick-up test". The crumb is a porous crumb impregnated with ungelatinised starch powder which renders ordinarily moisture absorbent crumb resistant to such absorption.

US2002146490 describes a fully baked, soft, breadstick product having a water activity in the range of about 0.9 to 0.95. The breadstick product is ideally suited for use in a refrigerated, ready-to-eat kit. The breadstick products are of a convenient size and shape with perforations to allow the breadstick product to be separated into individual breadsticks. The breadstick product is especially adapted as a single serving or snack food product.

WO9507025 describes a laminated dough system, comprising alternating layers of dough and laminated fat, which laminated fat layers contain a water-binding agent, while simultaneously at least one of the outer layers of the system is provided with a moisture barrier layer displaying improved properties like crispness, when subjected to microwaves.

Further, WO070731 describes a batter for coating a food product, the batter comprising flour, water and optionally starch, wherein the batter comprises glutenin particles, wherein the glutenin particles have a volume surface averaged particle size smaller than 10 µm, and wherein the batter comprises at least 40 wt.% water.

### Summary

It may be a desire to provide bread products having a specific sensory sensation. Further, bread products having an increased shelf life regarding fresh crumb and crispy crust and having improved crispness sensation, especially of the crust, or having other sensory sensations, are desired. Bread products with a crispy crust may not easily be provided.

Hence, it is an aspect of the invention to provide an alternative method for the preparation of a dough-based product, such as a bread, a parbaked bread, a crispy roll, etc., as well as to provide alternative products, for instance obtainable by this method, which alternative method and/or alternative bread products preferably further at least partly obviate one or more of above-described drawbacks.

In a first aspect, the invention provides a method for the preparation of a dough-based product, the method comprising:
a. providing a dough-based starting product, wherein preferably the dough-based starting product comprises a dough (first dough);
b. applying a flour-based material, preferably selected from the group consisting of a second dough and a batter, to at least part, such as at least 15%, of the surface of the dough-based starting product to provide a layer of said material with a layer thickness in the range of 0.1-10 mm; and
c. optionally baking or prebaking the product thus obtained.

An advantage of this method is that a bread product, such as a bread or roll, may be obtained with a specific sensory sensation, especially a more crispy crust. Providing a (composite) bread product with region(s) (i.e. outer layer(s) differing from rest of the bread product), for instance with different compositions, may provide a sensory effect, in addition to the "normal" sensory aspects associated with the bread product. This sensory effect may especially be obtained due to modifications, with respect to the prior art, of the peripheral part (peripheral layer) of the bread product. With respect to composition, prior art bread substantially have a homogenous composition of the bread; the composition of the crust, or one or more outer layers, is not substantially different from the crumb or core of the bread.

Consumers consuming a baked bread product obtainable by the method of the invention may perceive a crispier crust than when consuming a state of the art bread product, having a normal crust. Further, the crispiness of the crust may last longer than for standard bread products, not having an additional flour-based layer. This more crispy crust and prolonged crispiness of the crust may for instance be due to the fact that the extra crust layer or extra thick crust allows improved and/or prolonged crispiness.

The term "crust" herein especially refers to the layer obtained after baking, that is coloured, and has darker colour than the bulk (i.e. crumb). The term "crust" herein may also refer to the layer obtained after baking, that is more dense, i.e. has a lower porosity than the bulk. Hence, the term "crust" especially refers to the layer obtained after baking that has a darker colour than the crumb, that is more dense than the crumb and that is in general more dry than the crumb.

In a preferred embodiment, the flour-based material is a second dough. In another preferred embodiment, the composition of the dough-based starting product and the flour-based material differ. Therefore, in a preferred embodiment, the invention provides a method for the preparation of a dough-based product, the method comprising:
a. providing a dough-based starting product;
b. applying a second dough as flour-based material to at least part, such as at least 15%, of the surface of the dough-based starting product to provide a layer of said material with a layer thickness in the range of 0.1-10 mm;
c. optionally baking or prebaking the product thus obtained; wherein the compositions of the dough of the dough-based starting product and of the second dough differ.

In a specific embodiment, the dough of the dough-based starting product and the second dough comprise a leavening agent, and the proving time for the dough of the dough-based starting product and the second dough are different. Especially, the proving time of the second dough may be at least 10% shorter than the proving time of the dough of the dough-based starting product, preferably at least 20% shorter, such as least 50% shorter.

With the method of the invention, bread products may be provided that have a peripheral layer, i.e. an outer part of the bread product, including the crust, wherein the morphology may vary, wherein the composition may vary, and/or wherein the water activity may vary. In this way, specific sensory sensations may be created when consuming the bread product.

In a specific embodiment, the dough-based starting product comprises a dough. Such dough may also be indicated as "first dough".

In a further aspect, the invention provides a pre-baked bread having a surface and a second dough as flour-based layer applied to at least 15 % of the surface, wherein in an embodiment the compositions of the pre-baked bread and of the flour-based layer may differ. Especially, the compositions differ with respect to the salt content and/or the leavening agent. In yet a further embodiment, the invention provides a pre-baked bread having a surface and a second dough as flour-based layer applied to the surface, wherein in an embodiment the compositions of the pre-baked bread and of the flour-based layer may differ.

In yet a further aspect, the invention provides a bread product comprising a crumb and crust, wherein at least part of the crust is a multi-layer crust, having in an embodiment a crust thickness in the range of 0.5-10 mm, wherein in an embodiment one or more of (1) the compositions of the crumb and of the multi-layer crust differ, and (2) the compositions of (crust) layers in the multi-layer crust may differ. Especially, the compositions differ with respect to the salt content and/or the leavening agent. In such embodiments, two or more darkly coloured layers may be obtained, as a result of the presence of two or more crust layers. When consuming such bread, crispiness sensation may be enhanced, since two or more crusts may be perceived by the consumer.

In yet a further aspect, a bread product is provided having a surface, wherein when determining the water activity of the dough-based product as function of the distance from the surface of the crust in the direction of the crumb, for at least part of the bread product, the water activity is at least 5% higher in an outer layer closer to the surface than in layer further away from the surface. Hence, In yet a further aspect, a bread product is provided having a surface, wherein when determining the water activity of the dough-based product as function of the distance from the surface of the crust in the direction of the centre of gravity of the bread product, for at least part of the bread product, such as for at least 15%, the water activity is at least 2 % higher in an outer layer closer to the surface than in layer further away from the surface.

In a further embodiment, the invention provides a bread product comprising a crust and crumb, wherein for at least part of the crust, such as for at least 15% of the crust surface a decrease in water activity of at least 2% is observed along the line starting at the crust surface and ending in the centre of gravity of the product, said decrease in water activity being observed in the part of the bread product that consists of crumb and/or crust.

The difference in composition may in an embodiment relate to one or more differences in composition selected from the group consisting of salt content, leavening agent content, bread improver content and fiber content.

### Dough-based starting product

The term "dough-based starting product" refers to the material that is used as starting material to apply the method to: i.e. apply a flour-based layer and optionally (pre)bake the material coated with the flour-based material. The method may be applied with a dough as dough-based starting product but also with a pre-baked bread (such as parbaked bread) as dough-based starting product. The method may even be applied to a baked bread (herein sometimes also indicated as "fully baked bread"). Hence, the dough-based starting product may (also) be provided by pre-baking or baking a dough. In an embodiment, the dough-based starting product is a bread dough. Thus, the term "dough-based starting product" also includes a (bread) dough.Since the dough-based starting product may be a dough, a pre-baked bread or a bread, the method of the invention may also be described as a method for the preparation of a dough-based product, the method comprising:
a. providing a dough and optionally pre-baking or baking said dough, thereby providing a dough-based starting product selected from the group consisting of a dough, a pre-baked bread or a bread;
b. applying a flour-based material, preferably selected from the group consisting of a second dough and a batter, to at least part, such as at least 15%, of the surface of the dough-based starting product to provide a layer of said material with a layer thickness in the range of 0.1-10 mm; and
c. optionally baking or prebaking the product thus obtained.

With this method, multi-layer bread products, or more precisely, bread products with a multi-layer crust may be provided, having above-mentioned advantages. Further, with this method bread products may be provided with a specific peripheral layer, for instance having a specific concentration gradient of a component, also having above-mentioned advantages.

The term "peripheral layer" refers to the outer part or top part of the bread product, wherein, according to embodiments, gradients in water activity and/or gradients in composition and/or gradients in morphology may be observed. These gradients may provide the desired sensory effects. The term "peripheral layer" is especially assigned to the outer 1.5 or outer 1 cm of the bread product. The peripheral layer may comprise one or more outer layers and part of the crumb. The term "outer layer" relates to a layer closer to the surface than the core of the product. The "core" of the product relates to the non-peripheral part of the product and may essentially consist of most of the crumb. Herein, the one or more outer layers may have different properties with respect to composition and/or water activity than the rest of the product, which is more inwards in the product and further away from the surface than the one or more outer layer(s).

The term "dough-based starting product" may thus refer to a dough or a pre-baked bread (including a parbaked bread), but may also refer to a baked bread. Preferably, the dough-based starting product comprises a dough or a pre-baked bread, more preferably a pre-baked bread. Therefore, in a preferred embodiment, the invention provides a method for the preparation of a dough-based product, the method comprising:
a. providing a pre-baked bread (such as a parbaked bread);
b. applying a flour-based material, especially a dough, to at least part, such as at least 15%, of the surface of the pre-baked bread to provide a layer of said material with a layer thickness in the range of 0.1-10 mm; and
c. optionally baking or prebaking the product thus obtained.

The dough-based starting product has a surface, which may also be indicated as external surface. To at least part of this surface, the flour-based material is applied. This method may provide for instance a multi-layer crust bread, since the pre-baked bread has a (thin) crust, to which a flour-based material layer is applied, which provides upon baking a further crust layer.

In an embodiment wherein the dough-based starting product is a dough (first dough), preferably, before applying the flour-based material to at least part of the surface of the dough-based starting product, the dough is allowed to prove.

Preferably, the dough-based starting product has a thickness or height (not including the flour-based material layer) of at least 5 mm, more preferably at least 10 mm, such as in the range of 10-100 mm, such as in the range of 20-100 mm, like 30-100 mm. In embodiments wherein dough as dough-based starting product is used, an advantage of using dough having a sufficient thickness, such as at least 20 mm, may be that a soft crumb may be obtained. In embodiments wherein a parbaked bread or bread as dough-based starting product is used, the thickness may even be in the range of 20-300 mm, such as 50-250 mm.The term "thickness" especially refers to a maximum thickness. In relation to layers, the term "thickness" refers to the layer thickness.

In an embodiment, the dough-based starting product comprises fat in a content of 5 % or less, especially 4% or less, such as 3 % or less, like 2 % or less. In a further embodiment, the dough-based starting product comprises salt in a content of 0.5-5 %, preferably 1-4 %, such as 1.5-2.5 %. Leavening agent may be comprised in a content of 0.5-2.5 %, such as 0.5-2 %.

In an embodiment, the second dough has a fiber content that is different from the fiber content of the dough of the dough-based starting product. Especially, the second dough may comprise fibers in a content that is at least 5% lower or higher than the fiber content of the dough-based starting material. For instance, the fiber content in the dough-based starting material may be in the range of about 2-10 % (flour based), whereas the fiber content in the second dough may be about 10 lower or higher than the fiber content selected for the dough-based starting material.

Percentages of components herein are, unless indicated otherwise or unless apparent from the context, defined as weight of the component relative to the amount of flour. Thus, 3 % fat in a dough composition indicates that the dough compositions 3 grams fat for each 100 grams flour. The term "fat" refers, unless indicated otherwise or clear from the context, to a triglyceride, being a fat, or an oil, or a mixture of fats, or a mixture of oils, or a mixture of one or more fats and one or more oils.

### Dough-based product

In a further aspect, the invention provides a bread product having a surface, wherein when determining the composition of the dough-based product as function of the distance from the surface of the crust in the direction of the centre of gravity of the bread product, for at least part of the product, one or more of the following features can be determined: (1) the salt content is lower in an outer layer closer to the surface than in a layer further away from the surface, (2) the fat content is higher in an outer layer closer to the surface than in a layer further away from the surface, (3) the fiber content is higher in an outer layer closer to the surface than in a layer further away from the surface and (4) the leavening agent content (or leavening agent remains content) is lower in an outer layer closer to the surface than in a layer further away from the surface. Also (5) the bread improver content may differ. As will be clear to the person skilled in the art, the phrase "in an outer layer closer to the surface than in a layer further away from the surface" indicates that an aspect is different in an outer layer closer to the surface than in a layer more remote from the surface than said outer layer. The layer more remote from the surface is herein in general indicated as core.

According to yet a further aspect, a bread product is provided, the bread product having a surface, wherein when determining the water activity of the dough-based product as function of the distance from the surface of the crust in the direction of the centre of gravity of the bread product, for at least part of the product, the water activity may be higher in an outer layer closer to the surface than in a layer further away from the surface. Especially, the water activity is at least 2% higher, such as at least 5%, especially at least 10 % higher. In a specific embodiment, the water activity of the layer more remote from the surface (this may essentially be the crumb or core of the dough-based product), is at least 30%, like at least 40%, lower than that of the outer layer(s). A lower water activity in the core, or main part of the crumb, relative to the outer layer, may reduce water migration to the outer layer (s). In this way, crispiness of the crust of the dough-based product, especially a bread product, may better be guaranteed. As mentioned above, one or more outer layers may be present.

The term "dough-based product" refers to the product that may be obtained with the method of the invention after at least one application of the flour-based material to at least part, such as at least 15%, of surface of the dough-based starting product, and optionally after a subsequent (pre)baking. Herein, the term "dough-based product" may refer to bread (including bread products such as a (crispy) roll), pre-baked bread, such as a parbaked bread. The term "dough-based product" may also refer to dough including the flour-based material layer applied to at least part of the surface of the dough.

Thus, the dough-based product is the product of the herein described method, which at least includes (a) providing a dough-based starting product and (b) applying a layer of a flour-based material to said dough-based starting product, and optionally (c) a baking or prebaking after application of the layer to the dough-based starting product. Whereas the term "dough-based starting product" refers to the starting product (a) that is provided to apply one or more layers of a flour-based material to, the term "dough-based product" relates to the product after application of the layer of flour-based material (b) and optional prebaking and/or baking (c) (see also above).

### Pre-baked bread, parbaked bread and bread product

The term "pre-baked bread" relates to a dough that has been baked but has not been fully baked; a further baking is necessary to provide a fully baked bread product (that is ready to eat). An example of a pre-baked bread is a parbaked bread. Hence, instead of the term "pre-baked bread", also the term "pre-baked dough" may be used.

The term "parbaked bread" (or "par baked bread" or "part baked bread") especially refers to a "bread" that is obtainable by parbaking (or par baking or part baking), i.e. a cooking technique in which a bread or dough product is partially baked and then (rapidly) frozen for storage. The raw dough is baked as if normal, but halted at about 80% of the normal cooking time, and then it is (rapidly) cooled and frozen. The partial cooking substantially kills the yeast (if available) in the bread mixture, and sets the internal structure of the proteins and starches (the spongy texture of the bread), so that it is now essentially cooked inside, but not so far as to have generated a "full crust".

The term "bread product" may refer to any bread or bread product, such as a bread or a crispy roll. The term "bread" may refer for instance to white bread, brown bread, wholemeal bread, wheat germ bread, whole grain bread, multi-grain bread, kibbled bread, sourdough bread, roti, granary bread, rye bread, fruit bread, raisin bread, (wal)nut bread, flat bread, hearth bread, French bread, baguette, peasant bread, boule, bagel, ciabatta, corn bread, cottage bread, pita, Turkish bread, etc. Crispy rolls are sometimes also indicated as bread rolls. The term "bread product" thus refers to a fully baked product. The terms "dough-based starting product" and "bread" does in an embodiment not refer to one or more of a croissant, a cracker, a tortillia, puff pastry, pumpernickel, matzoh (or matza) and a bread stick, or a piece of dough suitable to one of the before mentioned products when baking according to a normal baking procedure for such products, respectively.

### Flour-based material and its application

The term "flour-based material" refers to the material that is applied to at least part of the surface of the dough-based starting product. The term "flour-based material" may especially refer to a dough or a batter. The term "flour-based material" is herein used in order to include both embodiments of a dough and a batter, respectively. The term "dough" is known in the art, and may especially refer to a mixture comprising flour and water, and usually a leavening agent (such as baking powder or yeast), which is stiff but pliable. The term "batter" is also known in the art, and may especially refer to a liquid mixture, usually based on one or more flours combined with liquids such as water, milk or beer. Egg is also a common component. Often a leavening agent is included in the mixture to aerate and fluff up the batter as it cooks (or the mixture may be naturally fermented for this purpose as well as to add flavour).

In a preferred embodiment the flour-based material is a dough; for the sake of understanding also indicated as "second dough". Therefore, in an embodiment a second dough is selected as flour-based material. The term "second dough" is used in order to distinguish from a (first) dough that forms or formed the basis of the dough-based starting product. The advantage of using a second dough as material to apply to at least part of the surface of the dough-based starting product is that relatively easily thin layers may be provided from such (second) dough. Further, a layer may be provided which may substantially be identical, with respect to composition with the dough-based starting product. Therefore, in a preferred embodiment, the flour-based material comprises the second dough, and the invention provides a method for the preparation of a dough-based product, the method comprising:
a. providing a dough-based starting product;
b. applying a second dough (as flour-based material), to at least part of the surface of the dough-based starting product to provide a layer of said material with a layer thickness in the range of 0.1-10 mm; and
c. optionally baking or prebaking the product thus obtained.

In yet another embodiment, the flour-based material is a batter (instead of the second dough). Therefore, in another embodiment the batter is selected as flour-based material.

Application of the dough or batter to the dough-based starting product may be done in different ways.

Assuming a batter as flour-based material, the batter may be coated by for instance spraying, brushing, or pouring on at least part of the surface of the dough-based starting product. Alternatively, the dough-based starting product may at least partly be dipped into the batter. Assuming a second dough as flour-based material, a layer of dough may be applied to the surface of the dough-based starting product. This may be done by simply covering, or by rolling or folding the dough-based starting product into the second dough, or any other suitable method.

The term "second dough" does, as mentioned above, not imply that the dough-based starting product (which can be considered as "first dough") is *defacto* dough when applying the second dough to the dough-based starting product. At the stage of applying, the dough-based starting product may also be a pre-baked bread product, or in principle also a fully baked bread (which herein are also considered the dough-based starting products).

The flour-based material may be applied to substantially the total surface, but it may also be applied to at least part of the surface. In a preferred embodiment, at least 10%, such as at least 15%, more preferably at least 20%, such as 10-100 %, like 20-50 %, of the total surface is provided with the flour-based material. Thus, in this way a layer of the material (i.e. the flour-based material) is provided to at least part of the surface of the dough-based starting product. In an embodiment, the flour-based material may be applied to provide a discontinue layer of the flour-based material on the dough-based starting product ("islands"). In a specific embodiment, the flour-based material is applied to provide a continuous layer (of the flour-based material) on the dough-based starting product. In this way, a continuous or integral layer may be provided.

The flour-based material is preferably applied in such a way, that a layer of that material is provided having a layer thickness in the range of 0.1-10 mm. Hence, the layer indicated here is the layer thickness of the flour-based material on the dough-based starting product before a subsequent (pre-)baking has been performed. Thin layers of dough may for instance be obtained by sheeting a dough, such as by expanding/stretching the dough. As mentioned above, the layer thickness of the flour-based material layer may be in the range of 0.1-10 mm. Preferably, the layer thickness of a single layer is in the range of 0.1-5 mm, like 0.2-4 mm, such as 0.4-2 mm.

In an embodiment, before applying the flour-based material to at least part of the surface of the dough-based starting product, (1) the surface of the dough-based starting product, or (2) the surface of the second dough, or (3) the surface of the dough-based starting product and the surface of the second dough, are at least partially wetted to provide a moist contact surface. This may especially be of relevance when a dough is applied as flour-based material; when a batter as flour-based material is applied, wetting of the dough-based starting product surface may not be necessary. By wetting the surface of the dough-based starting product and/or the flour-based material (especially the dough), adhesion between the dough-based starting product surface and the flour-based material layer may be improved. Especially when wetting the surface of the dough-based starting product, wetting may be performed with a liquid containing salt. In this way, the dough-based starting product, such as a dough or a parbaked bread, may be "brined".

Instead of one layer of flour-based material, also more than one layer of flour-based material may be applied. Therefore, the invention also provides a method for the preparation of a dough-based product, the method comprising:
a. providing a dough-based starting product;
b. applying the flour-based material to at least part of the surface of the dough-based starting product to provide a plurality of layers of said material, wherein the plurality of layers have a layer thickness in the range of 0.1-10 mm; and
c. optionally baking or prebaking the product thus obtained.

In this way, a crust (in the final fully baked bread product) can be provided having different properties and a crust may be provided that may perceived crispier than when consuming a state of the art bread having a "normal" crust. Further, the crispiness of the crust may last longer than for standard bread and bread products, not having an additional flour-based layer.

The phrase "the plurality of layers have a layer thickness in the range of 0.1-10 mm" indicates that the laminate of layers of flour-based material on at least part of the surface of the dough-based starting product has a layer thickness in this range. The individual layer thicknesses may for instance be in the range of about 0.1-5 mm, like 0.2-4 mm, or even smaller (see above). The layer(s) flour-based material that are provided to the dough-based starting product are herein also indicated as "top layers". When applying a plurality of layers in a sequential way, each time the surface of the applied layer or the surface of the layer to be applied or both the surface of the applied layer and the surface of the layer to be applied may at least partially be wetted to provide a moist contact surface.

The flour-based material may have be applied in an amount of about 0.1-30 wt.% relative to the dough-based material, thus in a weight ratio of about 0.1-30:100, especially in a weight ratio of about 0.5-20:100, such as 0.5-10:100.

### Specific embodiments

It appears that advantageously specific sensory perceptions (when consuming the final baked product) may be achieved when the compositions of the (dough of the) dough-based starting product and the flour-based material differ.

As mentioned above the term "dough-based starting product" may refer to a dough, but may also refer to a pre-baked bread or baked bread. The term "dough of the dough-based starting product" refers to the dough that formed the basis of a pre-baked bread (such as a parbaked bread) or a baked bread; it thus refers to the original dough. Hence, the phrase "the composition of the dough of the dough-based starting product and the flour-based material differ" indicate embodiments wherein the dough that is (was) used to make the dough-based starting product is different from the dough that is used to provide a layer to at least part of the surface of this dough-based starting product. For instance, a pre-baked bread may be made from a specific dough and to at least part of the surface a dough layer is applied, being identical to the specific dough, except for for instance the content of a leavening agent and/or the salt content.

Hence, in a specific embodiment of the method of the invention, the flour-based material comprises the second dough, and the compositions of the dough of the dough-based starting product and of the second dough differ.

Therefore, assuming dough as flour-based material, the compositions of the dough of the dough-based starting product and of the second dough preferably differ.

For instance, in an embodiment, the dough of the dough-based starting product comprises a leavening agent and the second dough does substantially not comprise a leavening agent. Herein, the phrase "the dough of the dough-based starting product comprises a leavening agent" indicates that the dough that forms the basis of the dough-based starting product comprises a leavening agent, such as yeast. The final baked bread may have a crust having a porosity of about 0-20 %, such as 5-20 %, like 10-15 %, when the second dough does substantially not comprise yeast.

In another embodiment, the dough of the dough-based starting product comprises a bread improver and the second dough does substantially not comprise a bread improver. In this way, even more one may tune for instance softness and crispiness perceptions.

In yet another embodiment, the second dough may have a salt content that is lower than the salt content of dough of the dough-based starting product.

In yet a further embodiment, the composition of an outer layer of flour-based material differs from the composition of an inner layer of flour-based material. For instance, when applying a laminate to for instance a dough or prebaked bread, the two or more layers of the laminate may differ in composition. One or more layers of the laminate may also differ in compositions with the dough of the dough-based starting product.

In an embodiment, the composition of the flour-based material, especially dough, differs from the dough of the dough-based starting product in one or more of the following respects selected from the group consisting of: the flour-based material has relative to the dough of the dough-based starting product (1) a lower salt content, (2) a higher fat content, (3) a lower leavening agent content and (4) a different bread improver content. Alternatively or additionally, also the fiber content may be varied.

Therefore, the invention also provides a method for the preparation of a dough-based product, the method comprising:
a. providing a dough-based starting product;
b. applying a flour-based material, selected from the group consisting of a second dough and a batter, to at least part of the surface of the dough-based starting product, to provide a layer of said material with a layer thickness in the range of 0.1-10mm;
c. optionally baking or prebaking the product thus obtained;
wherein the flour-based material comprises the second dough, and wherein the compositions of the dough of the dough-based starting product and of the second dough differ.

In an embodiment, wherein a plurality of flour-based material layers is provided to (at least part of the surface of) the dough-based starting product, one or more of (1) the compositions of the layers in the flour-based material multi-layer differ, and (2) the composition of one or more of the layers in the flour-based material multi-layer differ with the composition of the dough of the dough-based starting product, and the difference(s) is (are) in one or more of the following respects selected from the group consisting of (a) salt content, (b) fat content, (c) leavening agent content, (d) bread improver content, and (e) fiber content.

The dough-based product, such as a bread product, has a surface. Preferably, the dough-based product is prepared in such a way that when determining the composition of the dough-based product, especially a bread product, as function of the distance from the surface of the crust in the direction of the crumb, or in the direction of the centre of gravity, of the bread product, one or more of the following features can be determined: (1) the salt content is lower in an outer layer closer to the surface than in a layer further away from the surface (than said outer layer), (2) the fat content is higher in an outer layer closer to the surface than in a layer further away from the surface, (3) the leavening agent content (or remaining leavening agent content) is lower in an outer layer closer to the surface than in a layer further away from the surface, (4) the bread improver content is higher or preferably lower in an outer layer closer to the surface than in a layer further away from the surface, and (5) the fiber content is higher or lower in an outer layer closer to the surface than in a layer further away from the surface. The term "remaining leavening agent" may for instance refer to dead yeast cells. The (dead) yeast cell content (in a baked dough product) may for instance be determined with PCR techniques known in the art, see for instance Advances in Food Mycology, Volume 571 (2006), ISBN 978-0-387-28385-2, pages 69-106.

Preferably, one or more of the content(s) of salt, fat and leavening agent (or remaining leavening agent) are varied, even more preferably, one or more of the content(s) of salt and fat are varied. Preferably, the difference in content, defined as ratio, is 1.05 or larger, such as 1.1 or larger, like, 1.2 or larger, even more preferably 1.5 or larger, yet even more preferably 2 or larger, wherein in an embodiment the lower content may also be zero (especially in the case of a leavening agent and/or salt). In general, content differences may preferably be in the range of 0-50 %, such as 0.5-50 % (lower content / higher content), and are preferably at least smaller than 80% (1/1.2). In this way, the peripheral layer may comprise a high content outer layer and a low content outer layer (i.e. a layer having a specific compound in a high content and a layer having the same compound in a low content (including substantially zero), respectively).

For instance, assuming a dough layer (as flour-based material layer) on a dough (as dough-based starting product), the salt content in the dough may be 2 % (defined relative to flour) and the salt content in the dough layer may be 0.2 %.

Assuming a pre-baked bread, as dough-based starting product, with a flour-based material applied to at least part of the surface of the pre-baked bread, the dough-based starting product may comprises salt in a content of 1-4 % and the second dough may comprise salt in an amount of 50 % or less of the content of the salt in the dough-based starting product (i.e. of the pre-baked bread).

Further, assuming a baked bread product, for instance a layer close to the surface of the baked bread may have a salt content of about 0.2 % (d.w.b. (i.e. dry weight basis), whereas a layer slightly deeper may have a salt content of about 4.0 % (d.w.b.) and the salt content again deeper (for instance bulk) may be about 2 % (d.w.b.), thereby providing a mean salt content of about 2 % (d.w.b.). The term "mean" here indicates an average over the whole baked bread product.

In an embodiment, the flour-based material layer, or in case where more than one flour-based material layers are applied, the upper layer(s) preferably have a salt content in the range of about 0-1 %, such as 0-0.5 %. In the baked product, this may lead a outer layer having a salt content in the range of about 0-1 %, preferably 0-0.5 %.

In another embodiment, the flour-based material layer, or in case where more than one flour-based material layers are applied, the upper layer(s) preferably have a fat content in the range of about 5-50 %, such as 5-30 %. In the baked product, this may lead to a surface layer having a fat content in the range of about 5-55 % (d.w.b.), preferably about 5-30 % (d.w.b.). The dough of the dough-based starting product may have a fat content that is lower than the fat content of the flour-based material, such as in the range of 0-5 %, like 1-4, such as 2-3 %. In the baked product, this may lead to a mean fat content of also about 0-6 % (d.w.b.). The term "mean" here indicates an average over the whole baked bread product.

Assuming a pre-baked bread, as dough-based starting product, with a flour-based material applied to at least part of the surface of the pre-baked bread, the second dough may comprise fat in a content of 5-50 %, and the dough-based starting product (i.e. of the pre-baked bread) may comprise fat in a content equal to 50% or lower than the fat content in the second dough.

In another embodiment, the flour-based material layer, or in case where more than one flour-based material layers are applied, the upper layer(s) preferably have a yeast content in the range of about 0-0.5 %, such as 0-0.1 %. In the baked product, this may lead a surface layer having a remaining yeast content in the range of about 0-0.5 % (d.w.b.), preferably about 0-0.1 % (d.w.b.). The dough of the dough-based starting product may have a yeast content that is higher than the yeast content of the flour-based material, such as in the range of 0.5-2 %, like 0.5-1.5. In the baked product, this may lead to a mean remaining yeast content of also about 0.5-2 % (d.w.b.). The term "mean" here indicates an average over the whole baked bread product.

Assuming a pre-baked bread, as dough-based starting product, with a flour-based material applied to at least part of the surface of the pre-baked bread, the dough-based starting product may comprises a leavening agent, such as yeast, in a content of 0.5-5 % and wherein the second dough comprises the leavening agent in an amount of 50 % or less of the content of the leavening agent in the dough-based starting product (i.e. of the pre-baked bread).

In an embodiment, assuming a baked bread product, for instance a layer close to the surface of the baked bread may have a fiber content that is different from the fiber content in a layer deeper. Especially, an outer layer may comprise fibers in a content that is at least 5% lower or higher than the fiber content of a layer more remote from the surface of the baked bread product. For instance, the fiber content in the main part of the crumb, more remote from the surface of the baked bread product, may be in the range of about 2-10 wt.% (d.w.b.) (lower limit for white bread; higher limit for whole meal bread), whereas the fiber content in an outer layer, closer to the surface of the baked bread product, may be about at least 5 % lower or higher, such as 10% lower or higher. Assuming that the fiber content is higher in an outer layer with 10 %, and the fiber content in the crumb is about 5 wt.% (d.w.b.), the fiber content in an outer layer closer to the surface may be about 5.5 wt.% (d.w.b.).

Assuming a pre-baked bread, as dough-based starting product, with a flour-based material applied to at least part of the surface of the pre-baked bread, the second dough may comprise fiber in a content that is at least 5% lower or higher than the fiber content of the dough-based starting product (i.e. of the pre-baked bread).

Herein, the term "peripheral layer" may especially refer to a layer in the bread product having a thickness of about 1.5-1 cm, such as 1 cm, calculated from the surface. When the content of compounds are different between the dough-based starting product and the flour-based material layer, or in flour-based material laminate layers or one or more of the flour-based material laminate layers relative to the dough-based starting product, this may lead after baking to a bread product having a peripheral layer comprising layers wherein the content of the one or more compounds vary. The peripheral layer comprises the crust. In general, the crust, especially a crust not being a multi-layer crust, is less thick than about 1 cm. Hence, the peripheral layer may extend into part of the crumb. This peripheral layer may be considered a virtual layer. This peripheral layer may comprise the multi-layer crust as described herein. The peripheral layer may also comprise the concentration and/or water activity gradient as described herein.

Therefore, the invention provides in an embodiment a bread product having a surface, wherein a layer close to surface has a higher fat content than the bulk of the bread product; preferably, the fat content in bulk is about 0-6 % (d.w.b.), whereas the fat content in the layer close to the surface is at least 1.2 times larger. In another embodiment, the invention provides a bread product having a surface, wherein a layer close to the surface has a lower salt content than the bulk of the bread product; preferably the salt content in the bulk is about 1-3.5% (d.w.b.), and the salt content in the layer close to the surface is 80% or less of that in the bulk.

Contents of one or more components may be varied.

In an embodiment, the flour-based material does not comprise one or more of the components selected from the group consisting of yeast, sugar and oil, especially the flour-based material does not comprise sugar and/or oil, even more especially does at least not comprise sugar.

Preferably, the composition (defined as sum of weight percentage(s) of the component(s)) of the dough-based starting product and the composition (defined as sum of weight percentage(s) of the component(s)) of the flour-based material, are substantially the same, preferably are identical for at least 80 wt.%, preferably at least 90 wt.%, even more preferably at least 95 wt.% ("identicality weight percentage"). In a specific embodiment, the identicality weight percentage is at least 97 wt.% or larger, such as at least 98 wt.%.

For instance, assuming some first and flour-based materials having the following compositions, the identicality of the compositions is determined as follows (see below example):

| | Dough-based starting product (wt%) | Flour-based material (wt%) | ID¹ wt% |
|---|---|---|---|
| Carbohydrate | 50 | 51.5 | 50 |
| Protein | 15 | 15 | 15 |
| Fat | 3 | 3 | 3 |
| Salt | 2 | 0.5 | 0.5 |
| Others² | 30 | 30 | 30 |
| Total | 100 | 100 | |
| ID wt%¹ | | | ≥ 98.5 |

| | | | |
|---|---|---|---|
| 1: percentage identical or identicality weight percentage (ID wt%) 2: such as water; if there are more than one other components, the calculation may be performed for each component (such as, by way of example, for water, flavours, aromas, colouring agents, and seasonings) | | | |

The identicality factor is determined on a total weight basis.

### Pre-baking and baking

After applying the layer of the flour-based material, optionally baking or prebaking of the product thus obtained may be performed. The method of the invention may thus provide a pre-baked bread product or a baked bread product. Further, the method of the invention may also provide a coated dough-based starting product, that may be cooled or frozen for storage and/or transport, for later (pre-)baking. Here, the term "coated dough-based starting product" indicates a dough-based starting product comprising a layer of the flour-based material to at least part its surface.

As mentioned above, more than one layer of flour-based material may be applied to at least part of the surface of the dough-based starting product. In a specific embodiment, after applying a layer of the flour-based material and before applying a next layer of the flour-based material the intermediate product thus obtained is baked or pre-baked.

Especially when (pre-)baking is performed (before applying the first layer or before a subsequent layer of flour-based material), a final product may be obtained having a crust that comprises of different crust layers that may be visible by eye or by a microscope.

In embodiments wherein a laminate of dough layers is applied to a dough-based starting product, in the peripheral layer of the fully baked bread product, a distinction of the individual layers (from the original laminate layers) may not easily be able by eye or microscope, while during the (pre)baking process, the dough layers may merge together, respectively. Likewise, in embodiments wherein a dough layer (including a laminate of flour-based material layers) is applied to a dough, though a thicker and/or better crust may be obtained for the fully baked bread product, a distinction in the peripheral layer of the of individual layers (as a result of starting with a dough with on its surface a dough layer) may not easily be able by eye or microscope, while during the (pre)baking process, the dough layer and the top of the dough may merge together.

In a further aspect, the invention also provides intermediate and final products, obtainable with the method of the invention.

As mentioned above, in an embodiment, the method of the invention may also provide a coated dough-based starting product. Preferably, this is a dough-based product comprising a dough, having a surface and a flour-based layer applied to at least part of the surface, wherein the compositions of the dough and of the flour-based layer preferably differ. Especially, the dough-based starting product (not including the flour-based layer) has a thickness of at least 10 mm (before an optional folding or rolling of a layer to obtain a folded or rolled product). Further, preferably, the dough-based starting product comprises fat in a content of 5 % or less.

Not only a dough as dough-based starting product may be applied (see also above), but a pre-baked bread may be applied as dough-based starting product too. Hence, in a further embodiment, the invention provides a dough-based product comprising a pre-baked bread, having a surface, and a flour-based layer applied to at least part of the surface, wherein the pre-baked bread (thus not including the flour-based layer) has a thickness of preferably at least 10 mm, such as at least 15 mm, like in the range of 10-200 mm, or 20-300 mm, like 50-250 mm. In a further aspect, the invention provides a bread product comprising a crust having a thickness in the range of 0.2-10 mm, such as 0.5-10 mm, like 1-10 mm, like preferably 1.5-10 mm, like 2-10 mm, such as 2.5-5 mm. Yet in a further embodiment, the invention provides a bread comprising a multi-layer crust having a thickness in the range of 0.5-10 mm. The multi-layer crust may be visible by eye or by microscope (see also below).

Especially a dough-based product, such as a bread product, is provided wherein when determining the composition of the dough-based product as function of the distance from the surface of the crust in the direction of the centre of gravity of the bread product, one or more of the following features can be determined: (1) the salt content is lower in an outer layer closer to the surface than in a layer further away from the surface, (2) the fat content is higher in an outer layer closer to the surface than in a layer further away from the surface, (3) the leavening agent content (or remaining leavening agent content) is lower in an outer layer closer to the surface than in a layer further away from the surface, and (4) the bread improver content is different, i.e. higher or lower, in an outer layer closer to the surface than in a layer further away from the surface. As mentioned above, the content of the compound in the low content layer is preferably 50 % or less (including optionally zero) of the content of the compound in the high content layer.

As described above, preferably one or more of the contents of salt, fat and leavening agent (or remaining leavening agent) are varied, even more preferably, one or more of the contents of salt and fat are varied. Preferably, the difference in content, defined as ratio, is 1.2 or larger, even more preferably 1.5 or larger, yet even more preferably 2 or larger, wherein in an embodiment the lower content may also be zero (especially in the case of a leavening agent and/or salt).

Hence, in general, the composition of the outer layer(s) may differ from the rest of the bread product. Thus, in an embodiment, a composite bread product is provided, comprising an outer layer comprising a different composition than the rest of the composite bread product, although the composition may nevertheless substantially be the same. For instance, only the salt content or yeast content may differ, which may lead to only relatively small differences between the composition of the outer layer and the rest of the product.

In an embodiment, the (material of the) outer layer does not comprise one or more of the components selected from the group consisting of yeast, sugar and oil, especially the outer layer does not comprise sugar and/or oil, especially does at least not comprise sugar.

Preferably, the composition (defined as sum of weight percentage(s) of the component(s)) of the outer layer and the composition (defined as sum of weight percentage(s) of the component(s)) of the rest of the bread product (core), are substantially the same, preferably are identical for at least 80 wt.%, preferably at least 90 wt.%, even more preferably at least 95 wt.% ("identicality weight percentage"). In a specific embodiment, the identicality weight percentage is at least 97 wt.% or larger, such as at least 98 wt.%.

For instance, assuming the outer layer and the rest of the bread product having the following compositions, the identicality of the compositions is determined as follows (see below example):

| | Outer layer (wt%) | Rest of bread product (wt%) | ID¹ wt% |
|---|---|---|---|
| Carbohydrate | 50 | 51.5 | 50 |
| Protein | 15 | 15 | 15 |
| Fat | 3 | 3 | 3 |
| Salt | 0.5 | 2 | 0.5 |
| Others² | 30 | 30 | 30 |
| Total | 100 | 100 | |
| ID wt%¹ | | | ≥ 98.5 |

| | | | |
|---|---|---|---|
| 1: percentage identical or identicality weight percentage (ID wt%) 2: such as water; if there are more than one other components, the calculation may be performed for each component (such as, by way of example, for water, flavours, aromas, colouring agents, and seasonings) | | | |

The identicality factor is determined on a total weight basis.

As mentioned above, the flour-based material may be applied to substantially the total surface of the dough-based starting product, but it may also be applied to at least part of the surface. Hence, in an embodiment, the outer layer covers at least 10%, such as at least 15%, more preferably at least 20%, such as 10-100 %, like 20-50 %, of the total surface. In an embodiment, the outer layer is a discontinuous layer ("islands"). In a specific embodiment, the outer layer is a continuous layer. As mentioned above, one or more outer layers may be present (due for instance to the application of one or more flour-based material layers to the original dough-based starting product).

The flour-based material may have been applied in an amount of about 0.1-30 wt.% relative to the dough-based material, thus in a weight ratio of about 0.1-30:100, especially in a weight ratio of about 0.5-20:100, such as 0.5-10:100. Hence, the outer layer(s) may have a weight ratio to the rest of the product, the core, of 0.1-30:100, etc.

### Other specific aspects

The invention provides in an aspect a method for the preparation of a dough-based product, the method comprising:
a. providing an optionally pre-baked, dough-based core;
b. applying a farinaceous coating in the form of a dough or a batter onto at least part of the surface of the dough-based core to provide a coating layer with a layer thickness in the range of 0.1-10 mm;
c. optionally baking or parbaking the product thus obtained;
wherein the water activity of the dough-based core at the interface between the dough-based core and the coating layer is preferably at least 2% lower than the water activity of the coating layer at the same interface.

In a further aspect, the invention provides a composite parbaked or baked (i.e. fully baked) bread comprising a bread core representing at least 80 wt.% of the bread and an external bread coating representing at maximum 20 wt.% of the bread, said bread coating preferably covering at least 15% of the surface of the bread core, wherein the water activity of the bread core at the interface between the bread core and the bread coating is preferably at least 2 % lower than the water activity of the bread coating at the same interface.

In a specific embodiment, the dough-based product may be provided by coextrusion of the dough-based starting product and the flour-based material, especially a second dough. Co-extrusion may be followed by (par)baking.

### Brief description of the drawings

Embodiments of the invention will now be described, by way of example only, with reference to the accompanying schematic drawings in which corresponding reference symbols indicate corresponding parts, and in which:
Figure 1 schematically depicts possible process routes according to the prior art and according to embodiments of the present invention;
Figures 2a-2d schematically depict embodiments of a dough based starting product (2a) and of dough based products (2b-2d), respectively;
Figures 3a-3d schematically depict embodiments of bread products;
Figures 4a-4d schematically depict parts of dough-based products wherein schematically the concentration of a component as function of the distance to the surface of the dough-based product is depicted;
Figure 5 depicts a photograph of a bread product prepared according to an embodiment of the method of the invention; and
Figures 6a-6c schematically depict examples wherein salt content has been varied and figures 6d-6e show water activity and water content as function of time of the examples schematically depicted in figures 6a-6c

The drawings 1a-4d and 6a-6c are not necessarily on scale.

### Description of preferred embodiments

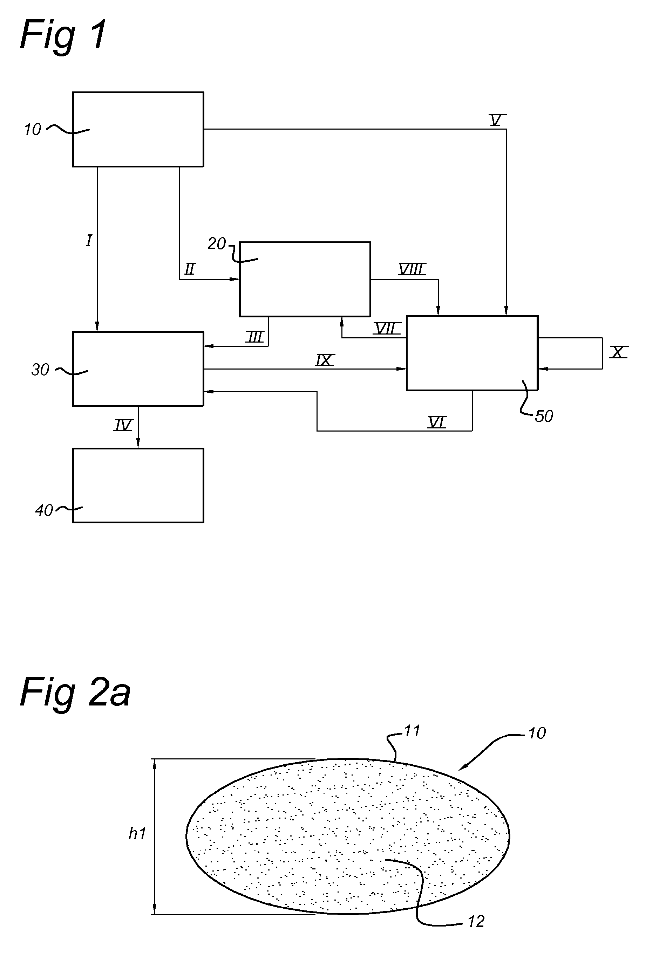

Figure **1** schematically depicts process routes according to the prior art and according to embodiments of the present invention. Below, first conventional routes are described, and then methods according to the invention are described in more detail.

In order to make bread products for consumption, in general two routes can be followed. The first process route is indicated with reference I (and IV), which indicate the process of providing a dough-based starting product 10 and baking the dough-based starting product 10 to provide a product ready for consumption. The baking process (full baking) is indicated with reference 30. Consumption is indicated with reference 40. Thus, first the dough-based starting product 10 is baked (I) and made ready (IV) for consumption (40). Possible intermediate steps such as freezing, storage, transport, etc., are for the sake of understanding not included in the schematic drawing.

Alternatively, in the second process route, indicated with references II and III (and IV), the dough-based starting product 10 is not fully baked, but pre-baked (II). Pre-baking is indicated with reference 20. Thereafter, in a final baking (also indicated with reference 30), again a product ready for consumption (40) is provided. The sub route from pre-baking, such as a process for providing a parbaked bread, is indicated with reference III. Again, possible intermediate steps such as freezing, storage, transport, etc., are for the sake of understanding not included in the schematic drawing.

The other routes are (optional) elements of embodiments of the method of the invention. Essential is the inclusion of the application of the flour-based material. This application or coating is indicated with reference 50. In all embodiments of the method of the invention, at least once application 50 of the flour-based material will take place.

Several routes can be followed to the application 50 of the flour-based material on the dough-based starting product 10.

A first route is a process route which is indicated with references V, (X), and VI (and VI). This route starts from the dough-based starting product 10, then a first application 50 on the dough-based starting product 10, followed by baking (30) (route VI) (and finally consumption 40 (route IV)). This application 50 may be a single application, but application 50 of the flour-based material on the dough-based starting product 10 may also be repeated. The latter embodiment is indicated with reference X. Hence, one layer of the flour-based material may be applied to the dough-based starting product 10, but also more than one layer of the flour-based material may be applied. For instance, two or more dough layers may be applied to the dough-based starting product 10. Reference X indicates both the application of a laminate of layers to the dough-based starting product 10 as well as a sequential application of layers to the dough-based starting product 10 to provide a laminate of flour-based material layers to at least part of the surface of the dough-based starting product 10.

Another route is a process route indicated with II, VIII, (X), and VI (and IV). This process route starts from the dough-based starting product 10, then a prebaking 20 (route II), subsequently application 50 on the pre-baked dough-based starting product (i.e. "pre-baked bread") (this may thus be a parbaked bread) (route VIII), followed by baking (30) (route VI) (and finally consumption 40 (route IV)). Again, this application 50 may be a single application, but application 50 of the flour-based material on the dough-based starting product 10 may also be repeated. The latter embodiment is indicated with reference X (see also above). Hence, one layer of the flour-based material may be applied to the pre-baked dough-based starting product 10 (i.e. "pre-baked bread"), but also more than one layer of the flour-based material may be applied. For instance, two or more dough layers may be applied to the pre-baked dough-based starting product 10 (i.e. "pre-baked bread").

A third process route would be the application on a baked bread product, which is indicated with at least references IX, (X), and VI (and IV). The process route that led to the baked bread product may be conventional routes I or II, III, but may in principle be also one of the above described process routs. Anyhow, this process route includes providing a baked bread product after baking process 30 and application 50 on the baked bread product (such as a bread) (route IX), and a final baking in a baking process 30 (route VI) (and finally consumption 40 (route IV)). Again, this application 50 may be a single application, but application 50 of the flour-based material on the baked bread product may also be repeated. The latter embodiment is indicated with reference X (see also above). Hence, one layer of the flour-based material may be applied to the baked bread product, but also more than one layer of the flour-based material may be applied. For instance, two or more dough layers may be applied to the baked bread product.

Application 50 of the flour-based material may be followed by pre-baking 20 (route VII) or baking 30 (route VI). Assuming more than one application 50, this may comprise providing a laminate of layers of flour-based material essentially in one process or providing layer after layer of flour-based material without including pre-baking 20 or baking 30. However, in another embodiment comprising providing a laminate of layers of flour-based material layer after layer, before application 50 of a subsequent layer, a pre-baking 20 or baking 30 may be applied. Such optional process routes are indicated with references VII, VIII and VI, IX, respectively.

Especially preferred process routes are the above described first and second routes.

Figure **2a** schematically depicts (in a cross-sectional view) an embodiment of a dough-based starting product, indicated with reference 10. Here, especially an example of dough is depicted; the dough may have been allowed to prove (if leavening agent is comprised by the dough-based starting product 10). The dough-based starting product 10 has a surface 11, and a bulk 12 (i.e. "crumb"). The height or thickness is indicated with reference h1. The thickness h1 may also be indicated as a maximum thickness (see also figure 2a).

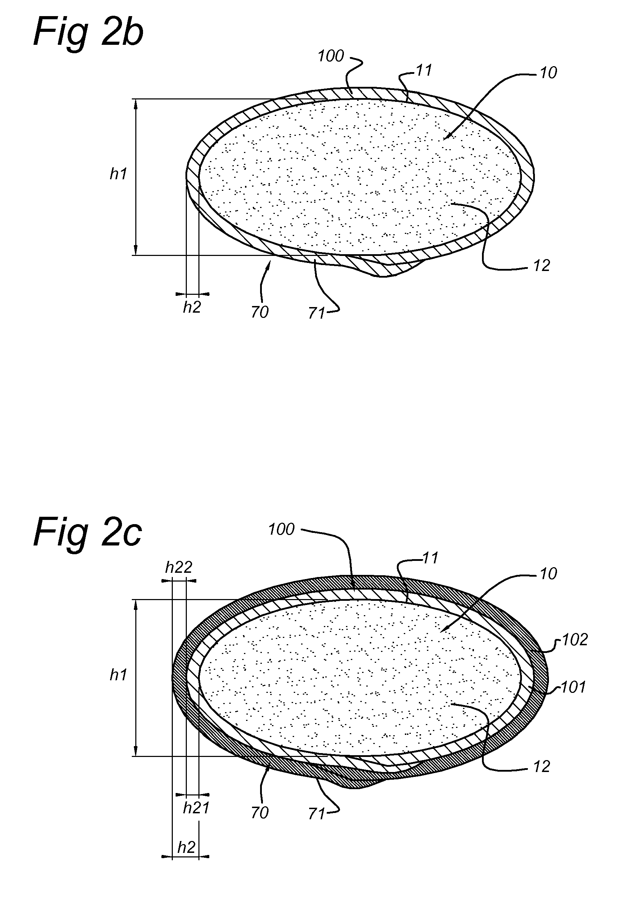

Figure **2b** schematically depicts (in a cross-sectional view) an embodiment of the dough based starting material 10, with a flour-based material 100 applied to at least part of the surface 11 of the dough-based starting product 10. This composite product is indicated as dough-based product 70. In the schematic figure, by way of example the entire surface 11 is coated with the flour-based material 100. This flour-based material 100 may be a second dough or a batter. The flour-based material layer 100 has a surface 71.

Here, especially an example of dough as dough-based starting product 10 is depicted; the dough may have been allowed to prove (if leavening agent is comprised by the dough-based starting product 10). Again, the height or thickness of the dough-based starting product 10 is indicated with reference h1; the height or thickness of the layer of flour-based material 100 is indicated with reference h2. The thickness h2 may also be indicated as a maximum thickness of the layer thickness of the layer of flour-based material 100.

The thickness h1 of the dough-based starting product 10, especially assuming dough, may be in the range of at least 10 mm, preferably larger; in this way, a soft crumb in the final baked bread product may be obtained. The layer thickness h2 of the layer of flour-based material 100 may be in the range of about 0.1-10 mm.

Figure **2c** schematically depicts the same embodiment as schematically depicted in figure 2b, however, now a plurality of layer flour-based material (by way of example two layers) have been applied to the dough-based starting product 10. Hence, the dough-based product 70 is a composite product comprising a dough-based starting product 10, with applied to at least part of its surface 11 a laminate of a plurality of flour-based material layers. The first layer, applied to the dough-based starting product 10 is indicated with reference 101, and has a layer thickness h21; the next layer of flour-based material 100 is indicated with reference 102, and has a layer thickness h22. In general, the layer thickness h2 of the flour-based material is the sum of the layer thickness h21, h22, ..., h2n of the respective flour-based material layers 101, 102, ..., n. Again, the layer thickness h2 of the layer of flour-based material 100 may be in the range of about 0.1-10 mm. Further, the thicknesses h21, h22,..., h2n may also be indicated as maximum thicknesses, respectively. The individual layers of the layer of flour-based material 100, indicated with references 101, 102, ..., n may have the same compositions but may also have between 2 and n different compositions (n is the total number of layers).

In order to improve adhesion between the dough-based starting product 10 and the layer of flour-based material 100, the surface 11 of the dough-based starting product 10 may be wetted, and/or when the flour-based material 100 is dough, the surface of the dough may also be wetted. Therefore, the method may also involve an embodiment wherein before applying the flour-based material 100 to at least part of the surface 11 of the dough-based starting product 10 the surface 11 of the dough-based starting product 10, or the surface of the second dough, or the surface 11 of the dough-based starting product 10 and the surface of the second dough, are at least partially wetted to provide a moist contact surface. Likewise, when applying a layer of flour-based material 100 on another layer of flour-based material 100, also at least part of one or both surfaces (that are brought into contact which each other) may be wetted.

In an embodiment, for wetting water is used. In another embodiment, for wetting egg white and/or egg yolk may be used. In yet another embodiment, for wetting a liquid, especially water, comprising enzymes, such as amylase, and/or protease and/or transglutaminase and/or glucoseoxidase may be used. In yet a further embodiment, water comprising salt is used, especially when wetting at least part of the surface 11 of the dough-based starting product 10. In this way, a layer just below the surface may be brined. Combinations of two or more wetting methods may also be applied.

Wetting is above described with respect to the dough-based starting product 10, especially dough, and the layer(s) of flour-based material 100 (especially dough; second dough). In principle, as described above, the dough-based starting product 10 may also be a bread product or a pre-baked bread.

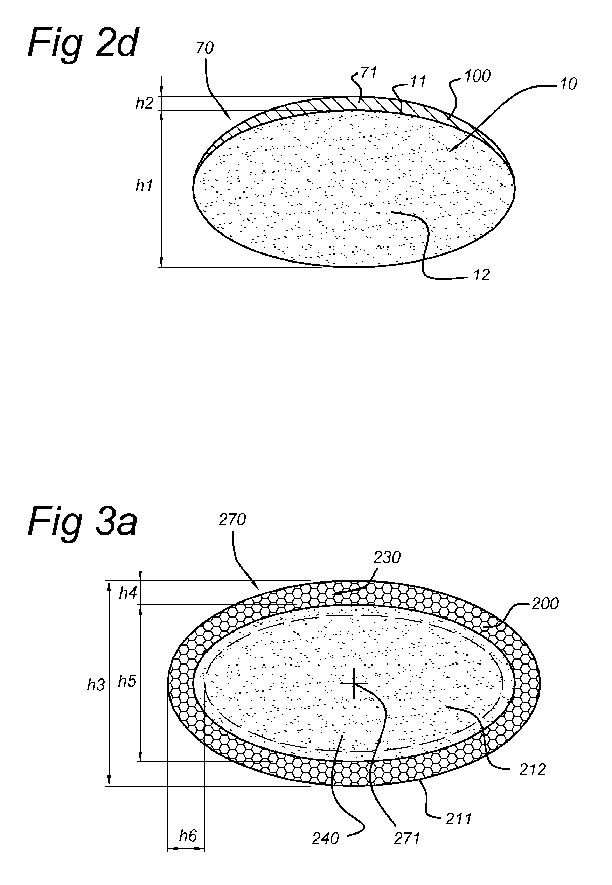

Figure **2d** schematically depicts a dough-based starting product 10 to which flour-based material 100 is provided to provide a layer covering only part of the surface 11 of the dough-based starting product. Also in this way an embodiment of the dough-based product 70 is provided. In figure 2d, the flour-based material layer 100 may cover at least 10%, such as at least 15%, of the total surface 11 of the dough-based material 10.

As mentioned above, figures 2a-2d are discussed with reference to doughs, but the dough-based starting product 10 may thus in an embodiment also be a pre-baked bread, i.e. a dough-based starting product that has been partially baked (such as a parbaked bread). In a specific embodiment, the invention further provides a dough-based product comprising a pre-baked bread, having a surface 11, and a flour-based layer 100 applied to at least part of the surface 11, wherein the pre-baked bread (thus not including the flour-based layer) has a thickness h1 of preferably at least 10 mm, preferably at least 15 mm, such as in the range of 15-200 mm.

In general, the flour-based material 100 is applied to dough-based starting product 10 at a temperature in the range from about 0-50 °C, such as in the range of 5-40 °C.

Figure **3a** schematically depicts an embodiment of a bread product 270. The term bread product refers to any bread product that has been fully baked. Reference 212 refers to the bulk, also indicated as crumb. The crust of the bread product 270 is indicated with reference 200. The total thickness of the bread product 270 is indicated with reference h3, and may for instance be in the range of about 15-250 mm, especially 20-200 mm; the layer thickness of the crust 200 is indicated with reference h4. The crust 200 is the outer hard portion of the bread product 270. The crust 200 may have a thickness h4 in the range of 0.5-10 mm, such as preferably 1.5-10 mm, like 2-10 mm. Further, the thickness of the crumb 212 is indicated with reference h5. Thicknesses h3, h4 and h5 may again be indicated as maximum thicknesses of the bread product 270, the crust 200, and the crumb 212, respectively.

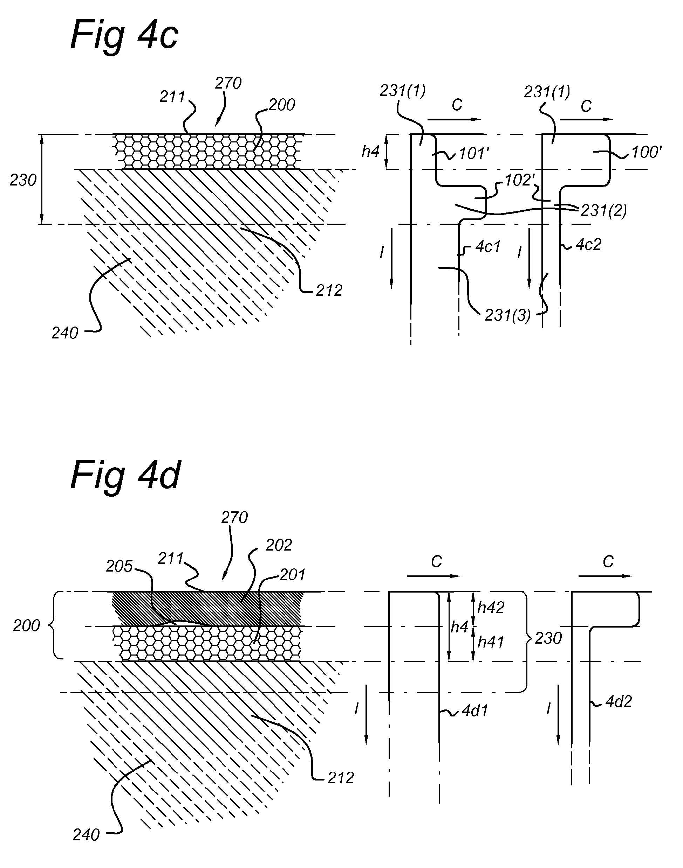

Figure 3a also schematically depicts a layer 230, which is herein also indicated as peripheral layer. This is a layer having about a thickness h6 of 1.5-1 cm (as determined from the surface 211), such as 1 cm, and which comprises at least part of the crust, but in general comprises the entire crust 200, since the crust 200 is usually thinner than about 10 mm. This peripheral layer is the layer between surface 211 and the dashed line. Within this layer, specific concentration gradients of compounds may be found (see also figures 4c and 4d). These concentration gradients may add to the crispiness sensation as well as to the long-term stability of the crispiness of the crust 200. The bread product 270 may thus comprise a peripheral layer 230 and the rest of the bread product. This rest, the non-peripheral part, is indicated with reference 240, which may also be indicated as core. In general, nearly the whole crumb may be comprises by the core 240. The centre of gravity is indicated with reference 271.

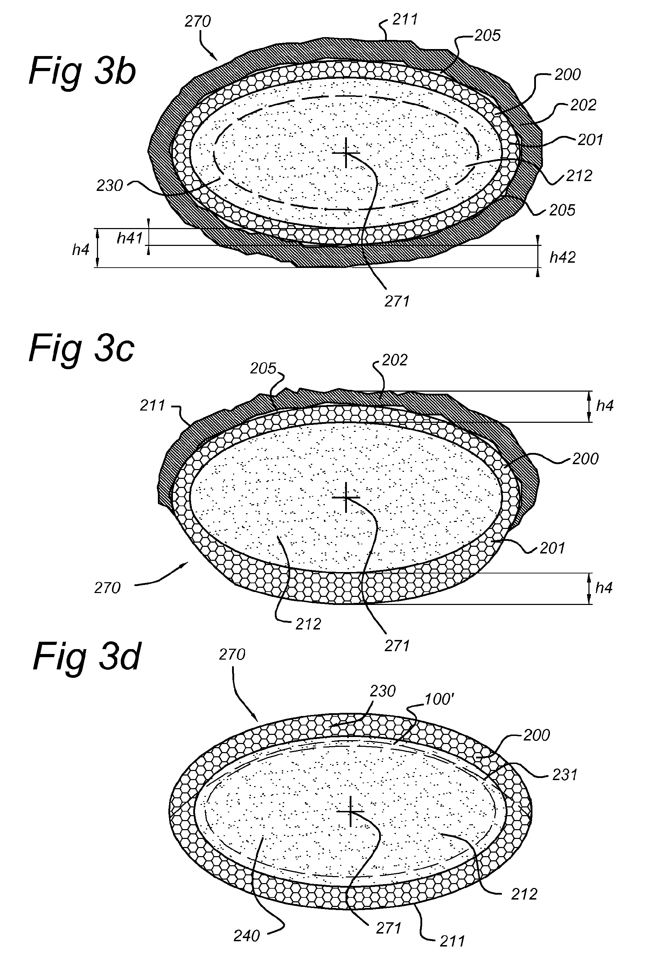

In a specific embodiment, schematically depicted in figures **3b****,** the bread product 270 comprises a multi-layer crust. Also this crust is indicated with reference 200. The multi-layer crust is indicated in figures 3b by way of example with two crust layers, indicated with references 201 and 202, respectively. However, more layers may be present. The former has a layer thickness indicated with reference h41; the latter has a layer thickness indicated with reference h42. In the schematic embodiment of figures 3b, a pre-baked bread having crust 201 may be depicted, to which a flour-based material 100 has been applied, leading to a bread product 270 comprising two crust layer 201,202, respectively. At some places between the crusts 201,202 voids 205 may have been evolved during the (pre-baking) process of the product provided with the second layer of flour-based material. Layer thicknesses h41, h42, ..., h4n, may again be indicated as maximum thicknesses, respectively.

Figure **3c** schematically depicts an embodiment of the bread product having crust 200, wherein part of the crust is a multi-layer crust and part of the crust 200 is a single layer crust. For instance, when applying a layer of flour-based material 100 to part of the surface 11 of the dough-based starting product 10 (see for instance figure 2d), the bread as schematically depicted in figure 3c may be obtained.

Figure 3d schematically depicts an embodiment of a bread product 270, for instance as obtained after baking the product schematically depicted in figure 2d. A crust 200 is obtained; the peripheral layer 230 is also indicated. This peripheral layer 230 comprises the crust 200. Further, part of this peripheral layer 230 comprises outer layer 231, which is based on the flour-based material layer 100 which was applied to part of the surface 11 of the dough-based starting product 10. This outer layer 231 is the part between surface 211 of the bread product 270, and the dashed line (in this figure the upper dashed line). Hence, only part of the peripheral layer 230 may contribute in this embodiment to the sensory effect. In order to indicate the fact that the outer layer 231 is based on the flour-based material layer 100 (see figure 2d), this outer layer is also indicated with reference 100'.

In figure 3d, the outer layer 231 is part of at least 10%, such as at least 15%, more preferably at least 20%, such as 10-100 %, like 20-50 %, of the total surface.

Hence, referring to amongst other figure 3d, bread product 270 may be provided, the bread product 270 having surface 211, wherein when determining the composition of the bread product 270 as function of the distance from the surface 211 of the crust 200 in the direction of the crumb 212, such as in the direction of the crumb, or in the direction of the centre of gravity 271, of the bread product, for at least part of the product, one or more of the following features can be determined: (1) the salt content is lower in the outer layer 231 closer to the surface than in a layer, such as core 240, further away from the surface 211, (2) the fat content is higher in the outer layer 231 closer to the surface than in a layer (such as core 240) further away from the surface, (3) the leavening agent content (or leavening agent remains content) is lower in the outer layer 231 closer to the surface 211 than in a layer (such as core 240) further away from the surface 211, and (4) the water activity is at least 2% higher in an outer layer 231 closer to the surface than in a layer (such as core 240) further away from the surface 211. Also the fiber content may be varied.

The phrase "wherein when determining the composition of the dough-based product as function of the distance from the surface 211 of the crust 200 in the direction of the centre of gravity 271 of the bread product 212 for at least part of the product" and similar phrases, may relate to embodiments wherein this applies for at least 10%, such as at least 15%, more preferably at least 20%, such as 10-100 %, like 20-50% of the surface 211. Assuming that the total surface 211 relates to 100% of the surface of the product, when the gradient as defined herein will apply for at least 10% of the total surface and the food product behind that surface. For the rest of the surface, if any, such gradient may not be present. Hence, 10% or more of the peripheral layer 230 may comprise such gradient in a direction from the surface to the crumb (or in a direction from the surface to the core 240).

When properties varies as function of the distance from the surface 211 of the crust 200 in the direction of the centre of gravity 271, this may imply that an outer layer has properties such as composition or water activity different from an (adjacent) layer more remote from the surface of the product.

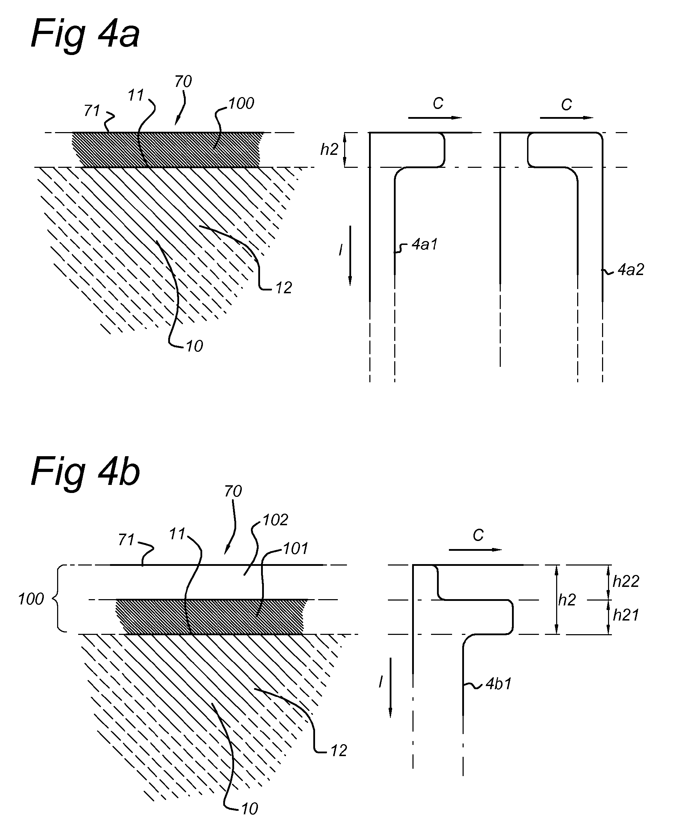

Figures **4a** and **4b** schematically depict magnifications of the embodiments schematically depicted in figures 2b and 2c, respectively.

Figure 4a schematically depicts on the left side part of the dough-based starting product 10 with layer 100 of flour-based material attached to at least part of the surface 11 of the dough-based starting product 10. This flour-based material layer 100 has a surface, indicated with reference 71.

The two diagrams show possible concentration dependencies of a compound or compounds as function of the distance 1 from the surface 71. Curve 4a1 shows an embodiment wherein the contents of a compound are relatively higher in the flour-based material layer 100 (i.e. over length h2) than in the bulk and curve 4a2 shows an embodiment wherein the contents (of another) compound are relatively lower in the flour-based material layer 100 (also over length h2) than in the bulk. The former curve may for instance display the fat content, which may for instance start at about 8 % or more and decline in the bulk to about 2-3%. The right diagram may for instance show an embodiment wherein the contents of salt (i.e. especially NaCl, such as salt for bakery applications) is varied, and wherein the bulk content is higher than in the layer of flour based material 100. For instance, the dough-based starting product 10 may have a standard salt content, whereas the layer of flour based material 100 has a salt content that is 50% or less of the salt content in the dough-based starting product 10.

Figure 4b schematically depicts substantially the same system, but now comprising two top layers 101,102 (see also figure 2c). The diagram at the right sight may for instance schematically depict the salt content as function of the distance 1 from the surface 71.

Referring to figures 2b, 2c, 4a and 4b, the layer(s) 100 or 101 and 102, respectively, may provide the regions or layers in the bread product, having differing compositions and or properties (see also figures 4c and 4d).

Figures **4c** and **4d** schematically depict embodiments of the embodiments schematically depicted in figures 3a and 3b, respectively.

Figure 4c schematically depicts bread product 270 having crust 200. The crust has a surface, indicated with reference 211. The crumb of the bread is indicated with reference 212.

The two diagrams show possible concentration dependencies as function of the distance 1 from the surface 211. Curve 4c1 shows an embodiment wherein the contents of a compound are relatively lower and higher in respective parts of the peripheral layer than in the bulk (crumb 212) and curve 4c2 shows an embodiment wherein the contents (of another) compound are relatively higher in the outer layer 231 than in the bulk 212. The latter curve may for instance display the fat content, which may for instance be at about 8 % or more and decline in the bulk to about 2-3%. The peripheral layer 230 thus displays a layer having a high content, close to the surface 211, and a layer with a lower content, further away from the surface 211. The left diagram (4c1) may for instance show an embodiment wherein the contents of salt (i.e. especially NaCl, such as salt for bakery applications) is varied. Here, the peripheral layer 230 displays a layer, close to the surface 211, having a low content, and a layer, further away from the surface 211, having a high content; further away, the content is intermediate.

Note that the boundaries of the concentration layers do in this schematic diagram not correspond to the boundary of the crust 200. Assuming a flour-based material layer 100 applied to a dough-based starting product 10, when cooking such product, part of the flour-based material layer 100 may turn into crust, but a "lower" part, i.e. a part more remote from the external, may also form crumb and may merge together with the dough-based starting product 10. For instance, assuming a dough as dough-based starting product 10 of 5 cm thick and a dough layer as flour-based material 100 of 5 mm applied to the dough, only about 0.1-0.3 mm of the dough layer may turn into crust, whereas the rest (0.4-0.2 mm) may, together with the dough, form the crumb. Of course, when a relatively thin layer of dough, for instance about 0.2 mm is applied to the dough, also the opposite may be true, in the sense that part below the surface 11 may also form crust. For that reason, by way of illustration, the top part with the low (4c1) and high (4c2) concentration may not be identical with the crust thickness h4. Of course, in some embodiments this may be identical; in other embodiments the crust layer is thinner or thicker.

Referring to figure 4c, the schematically depicted embodiment may also be the baking result of embodiments schematically depicted in figures 2b, 2c, 4a and 4b. For instance, when baking the embodiment of 2b/4a, results schematically depicted in figure 4c2 may be obtained: the layers with different composition(s) may lead to layers with different compositions. Likewise, for instance, when baking the embodiment of 2c/4b, results schematically depicted in figure 4c1 (but also of 4c2) may be obtained: the layers with different composition(s) may lead to layers with different compositions. Though this may not easily visible by eye, a bread product may be obtained with a layered structure, in the sense that one or more outer layers (here also indicated as layers) may differ in composition with each other and/or with the bulk of the bread product. This is explained in more detail below.

Assume that figure 4a (and 2b) schematically depicts a dough, here indicated with reference 10, and a dough layer (second dough), indicated with reference 100, applied to at least part of the surface 11 of the dough. Further, assume that the concentration of a component in the dough layer 100 is higher (4a1) or lower (4a2). When baking the composite product, a bread product may be obtained with a crust and a crumb. Figures 4c (left) may schematically show an embodiment of a bread product 270, such as a bread, with crust 200, surface 211 of this crust 200. It is assumed that part of the dough layer (second dough) forms the crust 200, and part of it has merged with the dough into the bulk of the bread (crumb). A peripheral layer 230 can be defined, of about 1 cm extending into the bread product 270. This peripheral layer 230 comprises the crust 270 and part of the crumb 212. Referring to curve 4c2, the dough layer 100 may lead to an outer layer or region indicated with 231 (1); in order to show the correspondence with dough layer 100, this layer is also indicated with reference 100'. In this layer, as a result of the relative high concentration of the specific component, also in the bread product the concentration in the resulting outer layer or region 231 is high. The dough 10 had a lower content, and this results in an (adjacent) region or outer layer 231, here indicated with reference 231(2) with a lower content; this layer or region is the product of the baked dough part (indicated with reference 10 in fig. 2b and 4a). Depending upon whether the content of a specific component in the second dough was higher or lower, curves 4a1 and 4a2, respectively may be found in the baked bread product when determining the content of the specific component.

Now, referring to figures 2c and 4b: assume that figures 4b (and 2c) schematically depicts a dough, here indicated with reference 10, and a dough layer laminate (second doughs), indicated with reference 101/102, applied to at least part of the surface 11 of the dough 10. Further, assume that the concentration of a component in the dough layers 101/102 is according to 4b1 (i.e. a dough with a concentration of a specific component, and the concentration of the adjacent second dough layer 101 is higher and the concentration of the second dough layer 102, adjacent to the second dough layer 101 (but not adjacent to the dough 10) is lower.

Referring to curve 4b1, the dough layer 101 may lead to an outer layer or region indicated with 231(1); in order to show the correspondence with dough layer 101, this layer is also indicated with reference 101'. In this layer, as a result of the relative low concentration of the specific component, also in the bread product the concentration in the resulting outer layer or region 231 is low. The dough layer 102 may lead to a layer or region indicated with 231 (2); in order to show the correspondence with dough layer 102, this layer is also indicated with reference 102'. In this layer, as a result of the relative high concentration of the specific component, also in the bread product the concentration in the resulting outer layer or region 231 is high. The dough 10 had an intermediate content, and this results in an (adjacent) region or outer layer 231, here indicated with reference 231(3) with an intermediate content of the component; this layer or region is the product of the baked dough part (indicated with reference 10 in fig. 2c and 4b).

Thus, the peripheral layer 230 may comprise different outer layers or regions, indicated with references 231(1), 231(2)....

In this way a bread product may be provided having a surface, wherein a layer close to surface has a higher fat content than the bulk of the bread product (for instance curve 4c1 (231(2)) or 4c2 (231(1))); preferably, the fat content in bulk is about 0-6 % (d.w.b.), whereas the fat content in the layer close to the surface is at least 1.2 times larger. In this way, also a bread product may be provided, having a surface, wherein a layer close to the surface has a lower salt content than the bulk of the bread product (for instance curves 4c1 (231(1)); preferably the salt content in the bulk is about 1-3.5% (d.w.b.), and the salt content in the layer close to the surface is 80% or less of that in the bulk.

Note that in general the bulk content will be substantially similar to the mean content. In a specific embodiment, they are substantially the same. The bulk is in both curves 4c1 and 4c2 similar with reference 231(3). In curve 4c2, with respect to the displayed specific component, layers 231(2) and 231(3) have merged together.

Figure 4d schematically shows en embodiment of part of bread product having a multi-layer crust as schematically depicted in figure 3b or 3c. Note that the crust thickness h41 and h42 are schematically depicted as substantially identical, but this is not necessarily the case. Assuming a the baking product of pre-baked bread with a dough layer applied to at least part of the surface 11 of the pre-baked bread (see also figure 2b), the crust of the pre-baked bread, in figures 3b and 4d indicated with reference 201 may in embodiments be thinner than an outer crust, in these figures indicated with reference 202.

Since the multi-layer crust, substantially even without varying the content of one or more of the components, may already provide the advantages of the invention, by way of example in the left diagram an embodiment is depicted wherein for instance the salt content or fat content does not substantially vary over the distance from the surface 211 (4d1).

The right diagram shows an embodiment wherein also the content of a component is varied, here for instance the fat content (4d2). Since in these embodiments, two different crusts 201,202 may be distinguished, here the crust boundaries and concentration boundaries may substantially be the same. The peripheral layer 230 here displays a layer with a high content, close to the surface 211, and a layer with a low content, farther away from the surface 211, which is by way of example similar to the content of that component in the bulk.

### Example 1: crispy rolls with top layer on dough

This example shows the enhanced crispiness of crispy rolls with a double-layered crispy crust by the application of thin layers of dough on dough.

Dough for the crispy rolls was prepared by mixing 3000 g of wheat flour (Edelweiss), 1809 g water (60.3%), 50 g dry yeast and 60 g salt in a Kemper SP 15 mixer (Kemper, The Netherlands). The initial temperature of the dough was 10°C. The mixing was stopped when a temperature of 26°C was reached. Two pieces of 2283 g were separated from the dough. These pieces were allowed to prove at a temperature of 30°C for 15 minutes. Afterwards the dough pieces were reshaped and allowed to prove again at a temperature of 30°C for 15 minutes. From one piece of dough 30 rolls were prepared using a rounder (WP Haton Rotamat, settings 6.0 pressing, 12 roundings) with about an equal mass of 76.1 g.

The dough for the thin top layer was prepared similar as is done to prepare the crispy rolls, only no yeast was used and the dough was not proved. After mixing the dough was left to rest for 10 minutes. Thereafter, the dough was sheeted using a sheeting machine towards a thickness of about 1 mm. From a part of this sheet, round parts with a diameter of 12.5 cm were cut: DL1. From the other part of the sheet, thin dough layers with a thickness of less than 0.5 mm were made by manually expanding and stretching the 1 mm thick sheet: DL2.

Also commercial Filo-dough (Albert Hein), also known as phyllo dough, was used as a thin top layer: FL. The fat/oil content of filo dough may be about 6-7 %.

The spherical dough parts of about 76.1 g (prepared as described above) were allowed to prove at 30°C for 5 minutes, after which the dough layers where applied resulting in four different batches:
A1: DL1 was applied on moistured dough.
A2: DL2 was applied on moistured dough.
A3: Moistured FL was applied on the dough.
A4: FL was applied on moistured dough.
Wetting was performed using a sprayer.

After that the crispy rolls, including top layers, where allowed to prove until a proving volume was reached of 500 ml (about 90 minutes). The volume of gas produced by the yeast was measured using a SJA Fermentograph (Franken, Goes, The Netherlands). Subsequently the rolls were pre-baked in the TNO experimental oven (Becker) for 10 minutes at 180°C (steam was applied (dew point of 75°C; convection of 40 Hz)). After prebaking the rolls were allowed to cool down for 30 minutes, after which they were stored in the freezer at -20°C.

After approximately one day of frozen storage the crispy rolls where baked off in a Bakermat Mastermind oven (Leventi, Gilze, The Netherlands) for 5 minutes at a temperature of 235°C. No steam was applied. The oven was preheated at 250°C

It is observed that the top layer crust which is applied on the dough of the crispy roll is fixed very well to it and seems to have been merged with the first/original crust of the crispy roll. This counts for all four batches. This results in a crispy roll having a more or less single outer crust but made off two layers of different dough which may have different composition and properties. This method allows for fabricating outer crusts made of different kinds of dough than the rest of the bread. This makes it possible to control the properties of the crust separately of that of the crumb. Further, a more crispy product is obtained.

### Example 2 crispy rolls with top layer on part baked crispy roll

This example shows the enhanced crispiness of crispy rolls with a double-layered crispy crust by the application of thin layers of dough on part baked crispy roll.

Dough for the crispy rolls and for the top layers was prepared as indicated in example 1. The spherical dough parts of about 76.1 g were allowed to prove at 30°C until a proving volume was reached of 500 ml. Subsequently the rolls were pre-baked in the TNO experimental oven (Becker) for 10 minutes at 180°C (steam was applied (dew point of 75°C and convection of 40 Hz). The pre-baked rolls were allowed to cool down for 30 minutes before the top layers were applied:
B1: DL1 was applied on moistured pre-baked crispy roll.
B2: DL2 was applied on moistured pre-baked crispy roll.
B3: Moistured FL was applied on the pre-baked crispy roll.
B4: FL was applied on moistured pre-baked crispy roll.
Wetting was performed using a sprayer.

Small holes were made in the dough sheets to allow the steam that is produced during baking to pass through more easily and to prevent delamination of the new top layer from the pre-baked crispy roll. After the top layer was applied the crispy rolls were pre-baked again in the TNO experimental oven (Becker) for 10 minutes at 180°C (steam was applied (dew point of 75°C and convection of 40 Hz) to prebake the top layer also. Thereafter the crispy rolls were stored in the freezer at -20°C. After approximately one day the crispy rolls where baked off in a Bakermat Mastermind oven (Leventi, Gilze, The Netherlands) for 5 minutes at a temperature of 235°C. No steam was applied. The oven was preheated at 250°C.

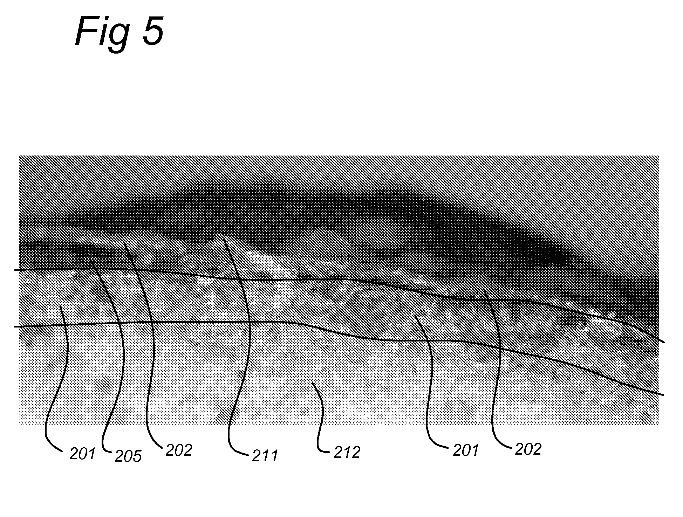

Figure 5 shows a picture of the crispy rolls after the baking off step. It is observed that the top layer crust which is applied on the dough of the crispy roll is in general fixed well to the first or original crust. Furthermore, the double crust layer structure can be clearly observed. This counts for all four batches.

After the crispy rolls were cooled down to about room temperature, they were tasted. This preliminary sensory test indicated the double layered crust is sensed more crisp than that of a control and that the crispness of the crispy rolls with the 2^{nd} outer crust made of file-dough is retained longer. Because the inner-outer crust acts as a barrier for water migration, it is expected that the crispness of the 2^{nd} outer crust will be retained much longer as compared to a normal single crusted bread. Furthermore, after storage for 2 hours at a relative humidity of 80%, the outer crust made of Filo-dough was still crispy. This is most probably due to the higher fat content of the Filo-dough which makes it less sensitive for water.

The feasibility study showed that it is very well possible to manufacture bread with an outer crust that is made of thin sheets of dough having different composition and properties resulting in outer crusts consisting of separated crispy layers. The composition and properties of the two layers can be different allowing controlling the properties of the second outer crust separately from that of the crumb and 1^{st} inner-outer crust.

### Example 3 Crispy rolls with low salt crust

Three model systems of bread types have been prepared by alternating dough layers (dough laminate) with different salt concentration with a total bread salt concentration of 2 % and subsequently baking the laminates.

A rich bread recipe was used to prepare the dough layers. The bread formula was: Edelweiss flour (1000 g), tap water (580 mL), kitchen salt (NaCl), Datem (1 g) and Fermipan red instant yeast. In order to produce the different dough layers at the same time the doughs were mixed using Hobart mixers. The amount of yeast used was dependent on the percentage of salt. In this way the proving time needed to produce a fixed amount of gas by the yeast was kept constant for all dough. The amount of yeast used was: 12.4, 19.9 and 43 g (per 1000 g flour) respectively when the amount of salt used was 2.5, 20 and 37.5 g (per 1000 g flour). After mixing the dough was sheeted to the desired thickness.

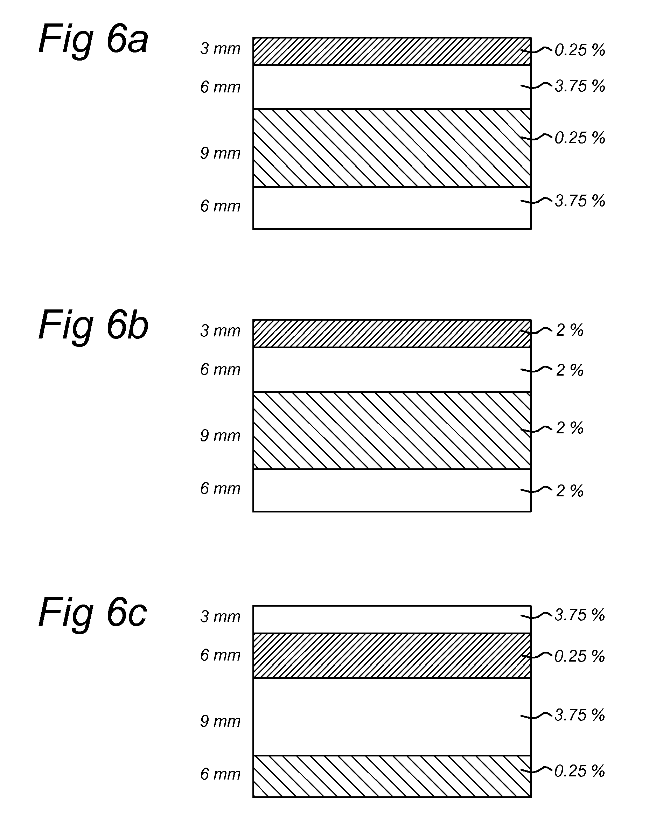

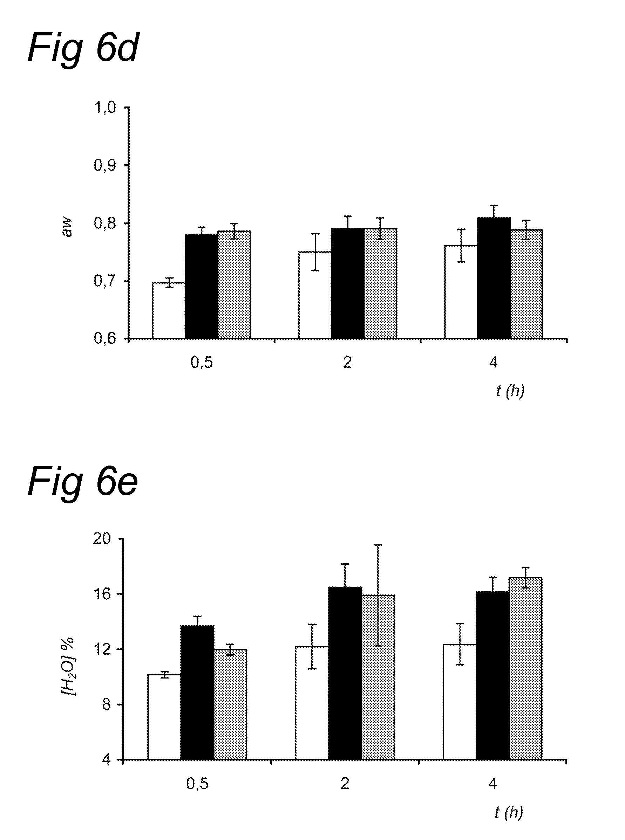

The number of layers and the salt concentration were chosen to keep the average salt concentration of the bread in 2%. Dough were prepared and sheeted to the chosen thickness, the order of the layers was dependent on the formulation (see figures 6a-c) and pieces of 75 g dough were used to parbake the breads. Colorant was added to one of the dough's to be able to differentiate between layers after baking the breads. Dough pieces were proved at 30°C and 80% RH until a fixed volume of gas produced (500 mL) in a SJA Fermentograph (Franken, Goes, The Netherlands).

The breads were par-baked at 180 °C during 10 min. The par-baked breads were allowed to cool down for 30 min and then were frozen -30°C and stored frozen at -20 °C. The par-baked breads were baked off in a Bakermat Mastermind oven (Leventi). The bake off conditions were: pre heating of the oven at 250°C, 235°C convection during 5 min.

After baking off, the breads were stored in a climatic cabinet Weiss SB 11300 at 22°C and at 40% RH. Bread samples were tested for water content and water activity at different times after baking: 0, 30, 60, 120 and 240 h.

The water activity and the water percentage in the crust were measured with an Aqualab (water activity) and with a dry oven method (water content) and are displayed in figures 6d-6e. The left bar indicates results for the crust with low salt (6a), the middle bar shows the results for the reference crust (6b), and the right bar shows the results for the high salt crust (6c). Both the water activity and the water content in the low salt crust are lower than in the "reference" salt crust and the high salt crust. Also with increasing storage time, the low salt crust has more advantageous properties. The low salt crust has a lower water activity and lower water content during storage.

A preliminary sensory test also showed that the variant of figure 6a (i.e. a bread wherein the salt content close to the surface is lower than in the crumb) has a more crispy crust during all storage times tested.

Therefore, by providing a salt gradient from crumb to crust or within the crust, wherein the salt content in parts more remote from the crumb is lower than in parts closer to the crumb, a crispier crust can be obtained and/or a crust that is crispy for a longer period of time.

The term "substantially" herein, such as in "substantially all emission" or in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A method for the preparation of a dough-based product, the method comprising:
a. providing a dough-based starting product, wherein the dough-based starting product comprises a first dough;
b. applying a second dough as flour-based material to at least 15 % of the surface of the dough-based starting product to provide a layer of said material with a layer thickness in the range of 0.1-10 mm;
c. optionally baking or prebaking the product thus obtained;
wherein the compositions of the dough of the dough-based starting product and of the second dough differ.

2. The method according to claim 1, wherein the dough of the dough-based starting product comprises a leavening agent in a content of 0.5-5 % and wherein the second dough comprises the leavening agent in an amount of 50 % or less of the content of the leavening agent in the dough-based starting product.

3. The method according to any one of the preceding claims, wherein the dough of the dough-based starting product comprises a leavening agent and wherein the second dough does substantially not comprise a leavening agent.

4. The method according to any one of the claims 1-2, wherein the dough of the dough-based starting product and the second dough comprise a leavening agent, and wherein the proving time for the dough of the dough-based starting product and the second dough are different.

5. The method according to claim 4, wherein the proving time of the second dough is at least 10% shorter than the proving time of the dough of the dough-based starting product.

6. The method according to any one of the preceding claims, wherein the dough of the dough-based starting product comprises salt in a content of 1-4 % and wherein the second dough comprises salt in an amount of 50 % or less of the content of the salt in the dough-based starting product.

7. The method according to any one of the preceding claims, wherein the second dough comprises fat in a content of 5-50 %, and wherein the dough-based starting product comprises fat in a content equal to 50% or lower than the fat content in the second dough.

8. The method according to any one of the preceding claims, wherein the second dough comprises fiber in a content that is at least 5% lower or higher than the fiber content of the dough-based starting product.

9. The method according to any one of the preceding claims comprising:
b. applying the flour-based material to at least part of the surface of the dough-based starting product to provide a plurality of layers of said material, wherein the plurality of layers have a layer thickness in the range of 0.1-10 mm.

10. The method according to claim 9, wherein the composition of an outer layer of flour-based material differs from the composition of an inner layer of flour-based material.

11. The method according to any one of the preceding claims, wherein the dough-based starting product has a thickness of at least 10 mm.

12. A pre-baked bread having a surface and a second dough as flour-based layer applied to at least 15 % of the surface, wherein the compositions of the pre-baked bread and of the flour-based layer differ, and wherein the compositions differ with respect to the salt content and/or the leavening agent.

13. A bread product having a surface, wherein when determining the composition of the bread product as function of the distance from the surface of the crust in the direction of the centre of gravity of the bread product, for at least part of the product, one or more of the following features can be determined: (1) the salt content is lower in an outer layer closer to the surface than in a layer further away from the surface, (2) the fat content is higher in an outer layer closer to the surface than in a layer further away from the surface, and (3) the leavening agent content (or leavening agent remains content) is lower in an outer layer closer to the surface than in a layer further away from the surface.

14. A bread product comprising a crust and crumb, wherein for at least 15% of the crust surface a decrease in water activity of at least 2% is observed along the line starting at the crust surface and ending in the centre of gravity of the product, said decrease in water activity being observed in the part of the bread product that consists of crumb and/or crust.

15. The bread product according to claim 15, wherein the decrease in water activity is observed at 0.2-15 mm below the crust surface.
